# EUROPEAN PATENT SPECIFICATION

(11) **EP 0 742 626 B1**
(45) Date of publication and mention of the grant of the patent: **01.04.1998**
(21) Application number: 96500059.9
(22) Date of filing: 09.05.1996
(51) Int. Cl.: H02G 3/04

(54) **Flexible sound-insulating hose**
Biegsamer, schalldämpfender Schlauch
Tuyau insonorisant flexible

(30) Priority: 10.05.1995 ES 9500893
(43) Date of publication of application: 13.11.1996
(73) Proprietor: RELATS, S.A., 08140 Caldes de Montbui, Barcelona (ES)
(72) Inventor: Boada Moret, Jordi, E-08480 L'Ametlla del Vallès (Barcelona) (ES); Serrat Callis, Antoni, E-08500 Vic (Barcelona) (ES); Relats Manent, Jordi, E-08410 Bigues i Riells (Barcelona) (ES); Relats Casas, Pere, E-08186 Lliçà d'Amunt (ES)
(74) Representative: Strobel, Wolfgang, Dipl.-Ing.

(56) References cited:
- EP-A- 0 465 837
- US-A- 4 989 422
- US-A- 5 300 337

## Description

The present invention relates to a flexible sound insulating hose comprising at least first yarns and second braided yarns, the first yarns being of plastic material and the second yarns of bulky material.

Insulating hoses of this type are used for covering automobile cables in order to absorb the sound which they can produce when they knock against the bodywork of the vehicle when the latter is running.

### BACKGROUND OF THE INVENTION

As they are subject to vibrations, automobiles produce noises which are annoying to the occupants of the vehicle. Amongst such noises are those produced by the cables when they knock against the vehicle bodywork due to vibrations.

Known in the art are various insulating hoses for covering automobile cables and absorbing the noise which they produce.

These hoses are usually made by braiding yarns of plastic material, which have the advantage of being very flexible and adapting to different cable diameters. The disadvantage of this type of hoses is that sound absorption is low due to the characteristics of the materials used.

Also known are insulating hoses made up of yarns of bulky material, which have the disadvantage that they have neither the right consistency or elasticity for use, although sound absorption is greater than most hoses with yarns of plastic material.

A combination of these two types of hoses, with yarns of plastic material and yarns of bulky material was disclosed by patent application PCT/GB90/00761 (see also US-A-4 989 422), which describes a textile sleeving for enclosing cables, wires or the like, which includes a monofilament yarn of plastic material with a diameter of 0.18 to 0.3 mm and a yarn of bulky material, the ratio between the number of yarns of plastic material and the number of yarns of bulky material being between 1 to 1 and 3 to 1.

This sleeving has the disadvantage that its elasticity is limited due to the number and diameter of the yarns of plastic material.

Moreover, sound absorption is limited due to its having a number of yarns of bulky material (which is the material which absorbs noise) equal to or lower than the number of yarns of plastic material.

### DESCRIPTION OF THE INVENTION

The hose of the invention provides a solution for the aforementioned disadvantages, while at the same time presenting other advantages which will be described.

The flexible sound insulating hose of the invention is of the type which includes at least first yarns and second yarns braided together, said first yarns being of plastic material and said second yarns being of bulky material, and is characterized in that the first yarns of plastic material have a diameter of between 0.5 and 0.7 mm approximately, the ratio between the numbers of first and second yarns being between 1 to 4 and 1 to 6.

Thanks to the diameter of the yarn of plastic material the hose has great elasticity, recovering its original length almost totally after being subject to traction, as can be seen from the tests carried out and described hereinafter in this specification.

Furthermore, the ratio between the first and second yarns allows sound absorption to be higher than in the known insulating hoses.

Advantageously, the hose of the invention also includes third yarns of multiple filaments, which increase still further the tensile strength of the hose of the invention.

Preferably, the ratio between the number of first and third yarns is between 1 to 1 and 1 to 3.

In one embodiment, the material of the third yarns is polyester.

Advantageously, the tensile strength of the first yarns of plastic material is between 70 and 100 N approximately.

Also advantageously, the tensile strength of the second yarns of bulky material is between 10 and 20 N approximately.

Also advantageously, the tensile strength of the third yarns made up of multiple filaments is between 35 and 60 N approximately.

### BRIEF DESCRIPTION OF THE DRAWINGS

For a better understanding of all that is outlined some drawings are attached which, schematically and by way of non-restrictive example, show several embodiments of the hose of the invention, together with the results obtained with the method of the invention.

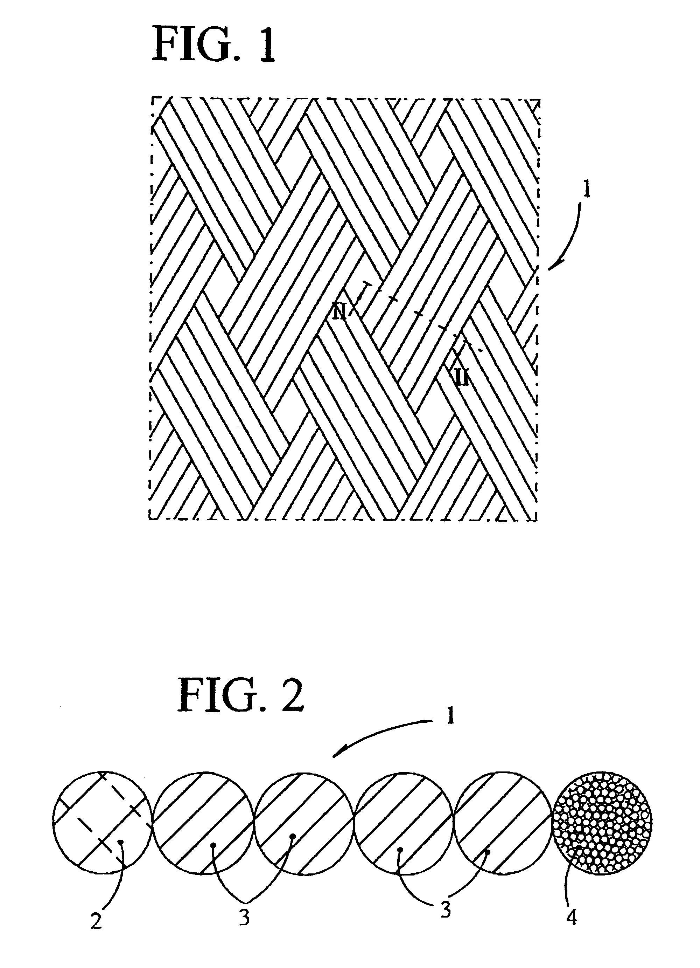

Figure 1 is a front view of a portion of the insulating hose;
Figure 2 is a section view along line II-II of Figure 1 of the yarns which constitute the insulating hose.

### DESCRIPTION OF A PREFERRED EMBODIMENT AND RESULT OF TESTS CARRIED OUT

The figures show that the hose 1 includes three different types of yarns braided together.

The first yarns 2 are monofilament yarns of plastic material with a diameter of between 0.5 and 0.7 mm approximately. For each first yarn 2 of plastic material there are four second yarns 3 of bulky material and a third yarn 4 made of multiple polyester filaments.

The ratio between the number of first monofilament yarns 2, the number of second bulky yarns 3 and the number of third multifilament yarns 4 can be any between 1-4-1 and 1-6-3.

This range of ratios endows the hose with greater elasticity, so that it recovers its original length almost entirely after being subjected to traction. Sound absorption is also greater than with known insulating hoses.

Several tests are now described, carried out with ten samples of the hose of the invention, Periflex Pep-0 (anti-sound) model, size 14, colour white, using the following apparatus:
- Heraeus forced-ventilation oven.
- Instron 1011 dynamometer.
- Combustion chamber manufactured by Relats, S.A. in accordance with standard ISO 3795.

a) Flame resistance test (according to ME PSA D 45-1333, edition of 15.3.93):
After ten samples the flame goes out immediately when the flame is removed from the sample (type A non-combustible).
b) Thermal ageing test:
After submitting the hose to 150°C for 140 hours it turned slightly brown.
c) Tensile strength and fracture elongation:
The following table sets out the results obtained with ten samples of the hose of the invention in its initial state:

| Sample | Monofilament yarn | | Bulky yarn | | Multifilament yarn | |
|---|---|---|---|---|---|---|
| | Tensile strength (N) | Fracture elongation (%) | Tensile strength (N) | Fracture elongation (%) | Tensile strength (N) | Fracture elongation (%) |
| 1 | 84.77 | 35.15 | 15.43 | 37.85 | 49.49 | 13.01 |
| 2 | 85.12 | 36.12 | 16.29 | 38.45 | 47.79 | 12.64 |
| 3 | 80.85 | 35.29 | 14.56 | 36.89 | 47.98 | 12.64 |
| 4 | 83.45 | 37.14 | 17.24 | 37.42 | 49.06 | 12.87 |
| 5 | 86.13 | 33.87 | 13.47 | 37.09 | 48.23 | 12.76 |
| 6 | 82.12 | 36.28 | 15.29 | 35.73 | 47.12 | 12.54 |
| 7 | 89.67 | 31.45 | 15.87 | 38.91 | 48.34 | 12.69 |
| 8 | 80.69 | 33.75 | 16.08 | 37.56 | 48.93 | 12.88 |
| 9 | 81.98 | 35.29 | 14.54 | 38.06 | 47.54 | 12.47 |
| 10 | 84.56 | 34.86 | 15.02 | 37.72 | 47.77 | 12.63 |
| Average | 84.77 | 34.92 | 15.38 | 37.57 | 48.23 | 12.71 |

The next table sets out the references and the results obtained with ten samples of the hose of the invention after 240 hours submitted to a temperature of 150°C.

| Sample | Monofilament yarn | | Bulky yarn | | Multifilament yarn | |
|---|---|---|---|---|---|---|
| | Tensile strength (N) | Fracture elongation (%) | Tensile strength (N) | Fracture elongation (%) | Tensile strength (N) | Fracture elongation (%) |
| 1 | 73.84 | 24.95 | 7.12 | 5.07 | 49.41 | 14.91 |
| 2 | 76.83 | 24.08 | 7.26 | 5.21 | 59.93 | 17.78 |
| 3 | 70.29 | 25.91 | 6.07 | 3.87 | 63.01 | 18.41 |
| 4 | 75.13 | 24.73 | 6.78 | 4.23 | 64.83 | 19.72 |
| 5 | 74.22 | 24.45 | 7.67 | 5.78 | 55.21 | 16.18 |
| 6 | 73.98 | 24.98 | 7.22 | 5.18 | 57.19 | 17.15 |
| 7 | 76.52 | 24.02 | 6.98 | 4.39 | 48.77 | 14.68 |
| 8 | 75.78 | 24.13 | 6.54 | 4.08 | 49.67 | 15.74 |
| 9 | 76.12 | 24.07 | 7.56 | 5.57 | 49.12 | 15.35 |
| 10 | 74.77 | 24.23 | 7.03 | 4.99 | 61.13 | 18.29 |
| Average | 74.75 | 24.55 | 7.02 | 4.84 | 55.83 | 16.82 |

As can be observed, the hose of the invention underwent no fundamental changes.
d) Contraction following ageing:
The table below sets out the results obtained with five samples of the hose of the invention after submitting it to a temperature of 150°C for 240 hours:

| Sample | Initial length (mm) | Length after contraction (mm) | % recovery |
|---|---|---|---|
| 1 | 200 | 198.0 | 1.00 |
| 2 | 200 | 197.5 | 1.25 |
| 3 | 200 | 197.0 | 1.50 |
| 4 | 200 | 197.5 | 1.25 |
| 5 | 200 | 199.0 | 0.50 |
| Average | 200 | 197.8 | 1.10 |

The test for calculating recovery of the hose is carried out with the following polyester yarns:
- 16 monofilament yarns of 0.5 mm diameter.
- 64 bulky multifilament yarns of 1340 denier.
- 16 multifilament yarns of 1100 denier.

The original diameter of the hose at rest was 10 mm and its original length at rest was 149 mm.

The following results were obtained by placing the hose in a mandrel:

| Mandrel ⌀ | Degree of exposure | Forced length (mm) | Hose ⌀ without mandrel (mm) | Hose length without mandrel (mm) |
|---|---|---|---|---|
| 20 mm | 100% | 95 (-36%) | 10.5 (+5%) | 141 (-5.4%) |
| 21 mm | 110% | 91 (-39%) | 11.0 (+10%) | 139 (-6.7%) |
| 23 mm | 130% | 70 (-53%) | 12.5 (+25%) | 135 (-9.4%) |

As can be observed, the hose of the invention did not undergo substantial changes.

## Claims

1. A flexible sound insulating hose (1), including at least first yarns (2) and second yarns (3) braided together, the first yarns (2) being of plastic material and the second yarns (3) of bulky material, characterized in that the first yarns (2) of plastic material have a diameter comprised between about 0.5 and 0.7 mm, the ratio between the number of first yarns (2) and the number of second yarns (3) forming the hose being between 1 to 4 and 1 to 6.

2. A hose, as claimed in Claim 1, characterized in that it also includes third yarns (4) of multiple filaments.

3. A hose, as claimed in Claim 2, characterized in that the ratio between the number of first yarns (2) and the number of third yarns (4) is between 1 to 1 and 1 to 3.

4. A hose, as claimed in Claims 2 or 3, characterized in that the material of the third yarns (4) is polyester.

5. A hose, as claimed in Claim 1, characterized in that the tensile strength of the first yarns (2) of plastic material is between 70 and 100 N approximately.

6. A hose, as claimed in Claim 1, characterized in that the tensile strength of the second yarns (3) of bulky material is between 10 and 20 N approximately.

7. A hose, as claimed in Claim 2, characterized in that the tensile strength of the third yarns (4) made up of multiple filaments is between 35 and 60 N approximately.

## Patentansprüche

1. Biegsamer schalldämpfender Schlauch (1), mit wenigstens ersten Garnen (2) und zweiten Garnen (3), die miteinander verflochten sind, wobei die ersten Garne (2) aus einem Kunststoffmaterial und die zweiten Garne (3) aus einem bauschigen Material gebildet sind, dadurch gekennzeichnet, daß die ersten Garne (2) aus Kunststoffmaterial einen Durchmesser zwischen ungefähr 0,5 und 0,7 mm aufweisen, wobei das Verhältnis zwischen der Anzahl der ersten Garne (2) und der Anzahl der zweiten Garne (3), die den Schlauch bilden, zwischen 1 zu 4 und 1 zu 6 liegt.

2. Schlauch nach Anspruch 1, dadurch gekennzeichnet, daß er auch dritte Garne aus Multifilamenten enthält.

3. Schlauch nach Anspruch 2, dadurch gekennzeichnet, daß das Verhältnis zwischen der Anzahl der ersten Garne (2) und der Anzahl der dritten Garne (4) zwischen 1 zu 1 und 1 zu 3 liegt.

4. Schlauch nach Anspruch 2 oder 3, dadurch gekennzeichnet, daß das Material der dritten Garne (4) Polyester ist.

5. Schlauch nach Anspruch 1, dadurch gekennzeichnet, daß die Zugfestigkeit der ersten Garne (2) aus Kunststoffmaterial ungefähr zwischen 70 und 100 N beträgt.

6. Schlauch nach Anspruch 1, dadurch gekennzeichnet, daß die Zugfestigkeit der zweiten Garne (3) aus bauschigem Material ungefähr zwischen 10 und 20 N beträgt.

7. Schlauch nach Anspruch 2, dadurch gekennzeichnet, daß die Zugfestigkeit der dritten Garne (4), die aus Multifilamenten gebildet sind, ungefähr zwischen 35 und 60 N beträgt.

## Revendications

1. Tuyau (1) flexible d'isolation acoustique incluant au moins des premiers fils (2) et des deuxièmes fils (3) entrelacés les uns avec les autres, les premiers fils (2) étant en matière synthétique et les deuxièmes fils (3) en matière texturée, caractérisé en ce que les premiers fils (2) en matière synthétique ont un diamètre compris entre 0.5 et 0.7 mm environ, le rapport entre le nombre de premiers fils (2) et le nombre de deuxièmes fils (3) constituant le tuyau étant compris entre 1 à 4 et 1 à 6.

2. Tuyau selon la revendication 1, caractérisé en ce qu'il comprend aussi des troisièmes fils (4) en filaments multiples.

3. Tuyau selon la revendication 2, caractérisé en ce que le rapport entre le nombre de premiers fils (2) et le nombre de troisièmes fils (4) est compris entre 1 à 1 et 1 à 3.

4. Tuyau selon la revendication 2 ou 3, caractérisé en ce que la matière constituant les troisièmes fils (4) est du polyester.

5. Tuyau selon la revendication 1, caractérisé en ce que la résistance à la traction des premiers fils (2) en matière synthétique est comprise entre 70 et 100 N environ.

6. Tuyau selon la revendication 1, caractérisé en ce que la résistance à la traction des deuxièmes fils (3) en matière texturée est comprise entre 10 et 20 N environ.

7. Tuyau selon la revendication 2, caractérisé en ce que la résistance à la traction des troisièmes fils (4) en filaments multiples est comprise entre 35 et 60 N environ.
